# EUROPEAN PATENT SPECIFICATION

(11) **EP 0 176 215 B1**
(45) Date of publication and mention of the grant of the patent: **05.01.1994**
(21) Application number: 85305812.1
(22) Date of filing: 15.08.1985
(51) Int. Cl.: H04M 1/72

(54) **Improvements to cordless telephones**
Schnurlose Fernsprechgeräte
Appareils téléphoniques sans cordon

(30) Priority: 15.08.1984 GB 8420702
(43) Date of publication of application: 02.04.1986
(73) Proprietor: BRITISH TELECOMMUNICATIONS public limited company, London EC1A 7AJ (GB)
(72) Inventor: Ball, John Robin, Woodbridge Suffolk, IP12 4JN (GB)
(74) Representative: Lloyd, Barry George William

(56) References cited:
- EP-A- 0 074 940
- US-A- 3 586 787
- US-A- 4 053 717
- US-A- 4 112 257
- US-A- 4 332 981

## Description

A cordless telephone consists of a portable part (handset) which communicates by radio with a fixed part (base unit). The handset contains a telephone earpiece and a microphone, a keying means such as a dial or keypad, a radio transmitter and a radio receiver. The base unit also contains a radio transmitter and receiver, and circuits for interfacing these to a telephone line. The interface circuits normally contain a means for detecting ringing current on the telephone line and sending an appropriate signal to the handset via the radio circuits, and also presenting a closed circuit (loop) to the telephone line and relaying dialling pulses or dialling tones from the handset to the telephone line.

As only a small number of radio channels are allocated for cordless telephone use there is a risk of misoperation where several cordless telephones are installed within radio range of each other. For example, a handset may establish contact with the wrong base unit and make calls to the wrong telephone line, or the wrong handset may respond to a ringing signal from a base unit. To counter these problems a known solution is to provide each handset and corresponding base unit with a security code which is unique to that pair of instruments. The security code consists of a sequence of binary digits and is transmitted by the handset to the base unit at the commencement of a call. The base unit is designed to respond only to the security code of the appropriate handset. Similarly when the base unit detects ringing current on the telephone line it transmits its security code to the handset, and only the correct handset responds with an audible signal to alert the user. The security code may be transmitted by frequency shift keying (fsk) of the radio carrier, or amplitude modulation of the radio carrier, or modulation of an audio frequency sub-carrier which is frequency modulated onto the radio carrier.

It is also current practice to modulate the radio carrier from the handset to the base unit with an audio frequency tone (continuity tone) in addition to the speech modulation. The frequency of the continuity tone is outside the range of telephone speech frequencies, and is typically 4.5 kHz. The tone is detected in the base unit and causes the base unit to maintain a loop on the telephone line.

Movement of the handset whilst in use can cause the strength of the radio signal received at the base unit to fluctuate (fade). If the received signal strength drops below the local noise level the continuity tone is interrupted, and the base unit may prematurely disconnect the line. This difficulty can be eased by delaying the response to loss of continuity tone in the base unit, but this will also delay the intentional clearing of the telephone line.

Another problem with the current technique arises when a call has been established and an alien handset is activated close to the base unit and on the same radio channel. If the strength of the alien radio signal received at the base unit is greater than that from the partner handset, then the alien handset captures control of the base unit.

European Patent No. 0074940 (Portaphone) discloses a cordless telephone having a handset and base unit suitable for duplex radio communication with each other. The units exchange audio signals throughout a call. At call initiation a unique exchange of security codes takes place between the handset and the base unit. Each unit is arranged 50 that its normal operation is inhibited if the correctly identified security code is absent, thus preventing establishment of the call. This will prevent an alien unit establishing a call, but it will not prevent capture of a unit by an alien unit once it has been established by the correct partner.

It is an object of this invention to reduce the risk that a base or handset unit may be captured by an alien unit.

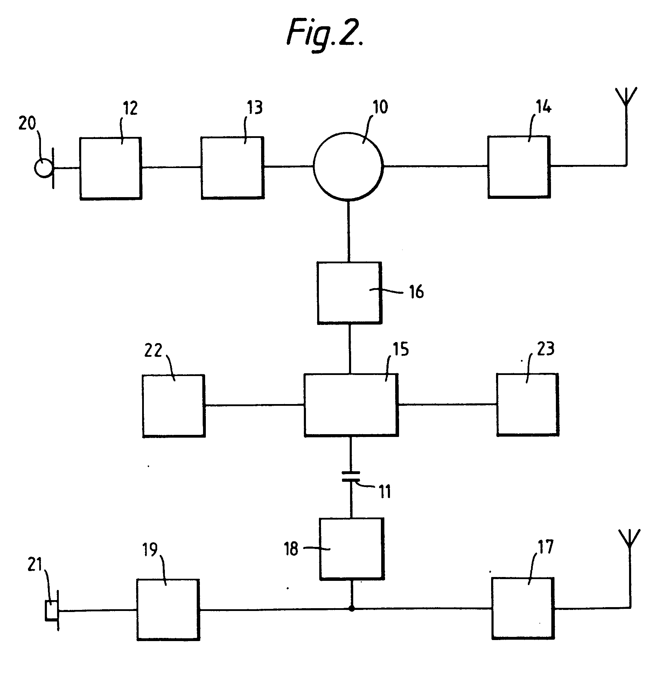

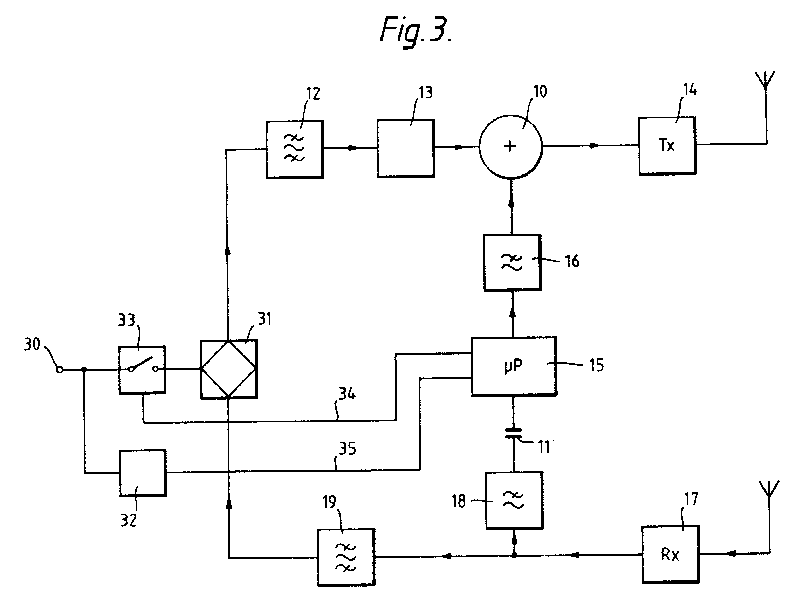

According to this invention security codes are repeatedly transmitted in both directions between a hands et and a base unit throughout a call. Accordingly, there is provided a cordless telephone which comprises a handset unit (10 to 23; fig 2) and a base unit (10 to 19, 30 to 35; fig 3) suitable for duplex radio communication with one another, said units being adapted for the simultaneous exchange of audio signals throughout a call and for the exchange of sequences of security codes, and each of the two units is adapted to inhibit its normal operation in the absence of correctly identified security codes, characterised in that the units are adapted for the repeated transmission of security codes in both directions throughout a call.

In the absence of correctly identified codes the call is terminated. The security codes are part of a data signal which preferably takes the form of a sequence of frames of binary digits wherein each frame contains a number of bits, e.g. 15 to 30 bits, representing a security code. The frame may also include a number of bits e.g. 5 to 10 bits, representing a message and optionally error detection or error correction bits. In the handset to base direction the messages may include any or all of the following:
1. A command to loop the telephone line.
2. A command to disconnect the telephone line.
3. A command to dial any of the diallable digits.
4. A command to energise a sounder in the base unit.
5. A command to generate a PBX recall signal.
In the base unit to handset direction the messages may include any or all of the following:
1. An indication that ringing has been received by the base unit.
2. An indication that a message received from the handset was in error.
3. An indication that a message received from the handset was error-free.
4. A command to energise a sounder in the handset.
The data signal signal preferably has a frequency below the audio band whereby an audio signal and the data signal may be combined as a frequency division multiplex into a composite signal which is modulated onto a radio carrier for transmission. The preferred form of transmission is frequency modulation.

The invention will now be described by way of example with reference to the accompanying drawings in which:-
Figure 1 shows, as a block diagram, circuitry for use in a unit according to the invention.
Figure 2 shows the circuitry of Figure 1 in a handset; and
Figure 3 shows the circuitry or Figure 1 in a base unit.

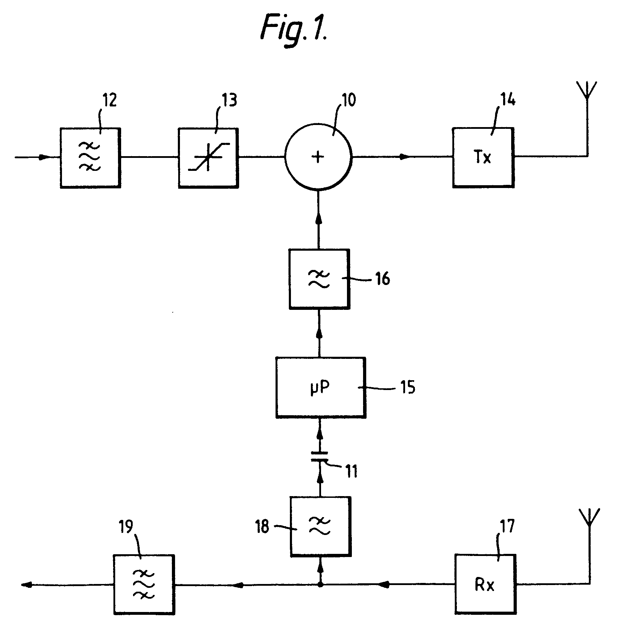

Figure 1 shows circuitry suitable for use in a cordless telephone unit, i.e. both at handset and base unit.

The transmit portion of the circuitry comprises a band pass filter 12 for receiving audio signals. The pass band of the filter corresponds to a conventional telecommunications audio band, e.g. 300 to 3400 Hz. The output of the filter 12 is connected, via an amplitude limiter 13, to an audio mixer 10 which acts as a multiplexer.

Data signals, including security codes, are generated, at a bit rate of 85 bit/s, by a microprocessor 15 which is also connected to audio mixer 10 via low-pass filter 16 with a cut-off at about 150 Hz. The output of mixer 10 is connected to radio transmitter 14.

The receive portion of the circuitry comprises radio receiver 17 whose demodulated output is connected to both band-pass filter 19 with pass-band 300 to 3400 Hz and low pass filter 18 with cut-off at 150 Hz. Filter 18 is connected to microprocessor 15 via capacitor 11.

The radio transmitters and the radio receivers utilise frequency modulation.

During use, each unit combines an audio signal, filtered to 300-3400 Hz, with data, filtered to below 150 Hz, into a composite signal which is a frequency division multiplex of the audio and the data. The composite signal is transmitted in frequency modulated form to its partner unit.

Each unit receives a radio-signal from its partner and demodulates it to obtain its partner's composite signal. Each unit includes a demultiplexer which comprises a band pass filter 19 and a low pass filter 18. Band pass filter 19 separates the audio component for output. Low pass filter 18 separates the data. Imperfections in the adjustment of the demodulation may introduce a DC bias which is Separated by capacitor 11 so that an intelligible data signal is received by microprocessor 15.

Figure 2 shows the circuitry of Figure 1 incorporated in a handset. In this configuration a microphone 20 provides input to filter 12 and filter 19 is connected to earpiece 21.

Keying means 22, Preferably a key pad although any digit selector such as a dial could be substituted, is connected to provide input to microprocessor 15 which is also connected to a liquid crystal display 23 whereby the microprocessor can provide a visible output in response to data signals.

Figure 3 shows the circuitry of Figure 1 incorporated into a base unit which includes a standard plug 30 for connection to a public service telephone line. Filter 12 (of the transmit path) and filter 19 (of the receive path) are both connected to an interface device 31 which is connected to plug 30 via a line switch 33 Microprocessor 15 is connected to control switch 33 by line 34 and to receive calling information by line 35 from ringing detector 32 which is also connected to plug 30.

The co-operative use of a base unit and a handset will now be described. To help distinguish the partners, a suffix "B" will be attached to components of the base unit whereas a suffix "H" will be attached to components of the handset.

The primary purpose of the invention is to provide the base unit with confirmation that its received signals originate from its correct partner handset. In order to achieve this microprocessor 15H generates a sequence of frames each of which consists of 24 binary digits. These are transmitted, as described above, at 60 to 200 bits per second whereby each frame lasts for about 200 to 400 m.secs (and there are 3 to 4 frames per second).

Each frame is composed of a security code of 16 bits and a message of 6 bits. The remaining two bits are a parity bit for the whole free and a polarity bit whose purpose will be described below.

The security code identifies the units. As the code contains 16 bits there are 65534 usable codes (since all zeros and all ones are deemed unusable). It is envisaged that the codes will be allocated at random but there is only a very low probability that two cordless telephones close enough to interfere with one another would have the same code and the same frequency.

Throughout a call microprocessor 15H generates its security code in each frame and these are received by microprocessor 15B. It compares each received code with its own stored code and it accepts a match as verifying that the received signal originates from its correct partner. If the base unit fails to receive the correct security code it assumes there is a fault and it terminates the call. Since the failure may be due to a transient fault, it is recommended that the microprocessor 15B wait for a short time, e.g. for 5 seconds from the time of last receipt of a correct code before terminating the call.

Three different failure modes can be distinguished:-
(a) failure to receive any signal at all or a signal too weak to be intelligible;
(b) receipt of a strong signal but with the wrong code;
(c) receipt of a strong signal but without any intelligible code.

Mode (a) arises if the handset is too far from the base unit or if masking causes too much attenuation. If the weak signal persists for more than 5 seconds it is assumed that communication will not be possible and microprocessor 15B terminates the call (by opening switch 33B).

Mode (b) arises if an alien handset on the same frequency swamps transmission from partner handset, e.g. if partner handset is further away than the alien handset. In this case the base unit will receive the wrong identification code and it will terminate the call after an interval of 5 seconds.

Mode (b) may also arise when a pair of units is idle, i.e. neither is transmitting but both are "receiving" in case partner desires to initiate a call. If an alien begins to transmit, or is transmitting, on the same frequency then potentially confusing signals may be received because there is no competition from the partner. However the alien signal will not be recognised because it lacks the correct identification code. In the absence of recognition a unit will not activate so it will not be taken over by the alien.

Mode (c) arises if the signals received from an alien handset are about the same strength as the signals received from partner handset. The interference between the two signals may result in unintelligible noise whereby the microprocessor 15B fails to recognise its correct codes and, therefore, it terminates the call after 5 seconds.

The procedure described above thus constitutes verification that correct transmission is occurring. If the verification breaks for over 5 seconds the base unit terminates the call.

By way of further explanation, the procedure for handling incoming and outgoing calls will be described.

The reception of a call at plug 30B causes ringing detector 32B to signal to microprocessor 15B by line 35B. Microprocessor 15B leaves switch 33B open (i.e. it does not answer the call). Microprocessor 15B activates transmitter 14B and it starts to transmit the identification code in frames as described above. The six message bits are used to transmit a "calling code", i.e. a message indicating an incoming call.

The transmission is received by partner handset and microprocessor 15H checks that the correct identification code is in the frame; if this code is lacking it ignores the message. Otherwise the microprocessor 15H recognises the calling code and it activates an audible warning device (not shown). The operator then switches on the transmitter of the handset causing transmission of data frames as described above. On receipt of the correct identification code microprocessor 15B closes switch 33B to answer the call. Speech and data transmissions thereafter continue simultaneously as described above.

If the operator wishes to terminate, then switching off the handset causes transmission of a "terminate" code using the six message bits of the data frame. On receiving the "terminate" code microprocessor 15B opens switch 33B and switches off its transmitter 14B. (In any case if this message is not received the base unit will terminate 5 seconds after the handset stops transmitting.)

To originate a call from the handset the operator switches on the transmitter 14H. Microprocessor 15H begins to transmit security codes. If correct, these are recognised by microprocessor 15B which closes switch 33B and initiates transmission from transmitter 14B whereby dialing tone is heard by the operator. Thus, using keying means 22H, the operator keys the number required which is transmitted to the base unit using the 6 message bits in each data frame; 12 codes are needed, i.e. a code for each decimal digit and the symbols # and *. The operator will hear the ringing tone and speech when the called party answers. The remainder of the transmission occurs in the same way as for incoming calls.

The data frames are preferably transmitted continuously and without synchronisation patterns. There is a probability of incorrect recognition of the wrong identification code because of the adventitious occurence of a bit pattern in an alien frame but not in the code-part thereof. To reduce this probability alternate frames are transmitted with the 6 message bits having reverse polarity. The polarity bit takes values "0" and "1" in alternate frames and thereby it helps to identify the repeat structure.

The data is preferably transmitted using Manchester code.

## Claims

1. A cordless telephone which comprises a hands et unit (10 to 23; fig 2) and a base unit (10 to 19, 30 to 35; fig 3) suitable for duplex radio communication with one another, said units being adapted for the exchange of audio signals throughout a call and for the exchange of sequences of security codes, and each of the two units is adapted to inhibit its normal operation in the absence of correctly identified security codes, characterised in that the units are adapted for the repeated transmission of security codes in both directions throughout a call.

2. A unit suitable for use as either the handset unit or the base unit of a cordless telephone according to claim 1, which unit comprises: -
(a) data generation means (15) adapted to generate a data signal which includes a sequence of security codes;
(b) a multiplexer (10) adapted to produce a composite signal which comprises the data signal generated by data generation means (15) and an audio signal;
(c) a radio transmitter (14) connected to said multiplexer for the transmission of the composite signal to a partner unit;
(d) a radio receiver (17) adapted to receive a composite signal from a partner unit;
(e) a demultiplexer (18, 19) adapted to separate the received composite signal into an audio signal and a data signal;
(f) data handling means (15) connected so as to receive the data signal from the demultiplexer said data handling means being adapted to inhibit the normal operation of the unit in the absence of correctly identified security codes.

3. A unit according to claim 2, wherein the data generation means (15) is adapted to produce a sequence of data frames each of which frames contains a security code.

4. A unit according to claim 3, wherein the data generation means (15) is adapted to produce at least selected frames which, as well as the security code, contain instructions to its partner unit.

5. A unit according to any one of claims 2, 3 or 4, wherein the data generation means (15) is adapted to produce a data signal having a maximum frequency below 150 Hz, the audio signal has a minimum frequency above 150 Hz and the composite signal is a frequency division multiplex.

6. A unit according to any one of claims 2 to 5, wherein the data handling means (15) is adapted to inhibit normal operation between 1 and 30 seconds after the last correct security code has been detected.

7. A unit according to any one of claims 2 to 6, wherein the data handling means (15) is adapted to confirm the correct receipt of at least one security code before initiating normal operation.

8. A unit according to any one of claims 2 to 7, wherein the data handling means (15) is adapted to recognise instructions contained in the received data signal and to cause its own unit to conform to said instructions.

9. A unit according to any one of claims 2 to 8, wherein the radio transmitter (14) is tuned to one frequency and the radio receiver (17) is tuned to a different frequency.

10. A unit according to any one of claims 2 to 9, wherein the data handling means and data generation means are combined in a single data processing means (15).

## Patentansprüche

1. Schnurloses Telefon, das eine Handapparateinheit (10-23; Fig. 2) und eine Basiseinheit (10-19, 30-35; Fig. 3) aufweist, die geeignet für Duplexradiokommunikation miteinander sind, wobei die Einheiten für den Austausch von Audiosignalen während einem Anruf und für den Austausch von Folgen von Sicherheitskodes angepaßt sind, und wobei jede der beiden Einheiten angepaßt ist, um ihren normalen Betrieb bei der Abwesenheit von korrekt identifizierten Sicherheitskodes zu sperren, dadurch gekennzeichnet, daß die Einheiten angepaßt sind für die wiederholte Übertragung von Sicherheitskodes in beiden Richtungen während einem Anruf.

2. Einheit, geeignet zur Verwendung als entweder die Handapparateinheit oder die Basiseinheit eines schnurlosen Telefons gemäß Anspruch 1, wobei die Einheit aufweist:
(a) Eine Datenerzeugungseinrichtung (15), die angepaßt ist, um ein Datensignal zu erzeugen, das eine Folge von Sicherheitskodes aufweist;
(b) Ein Multiplexer (10), der angepaßt ist, um ein zusammengesetztes Signal zu erzeugen, das du Datensignal aufweist, du durch die Datenerzeugungseinrichtung (15) erzeugt wurde, und ein Audiosignal;
(c) Ein Radioübertrager (14), der mit dem Multiplexer für die Übertragung des zusammengesetzten Signales zu einer Partnereinheit verbunden ist;
(d) Ein Radioempfänger (17), der angepaßt ist, um ein zusammengesetztes Signal von einer Partnereinheit zu empfangen;
(e) Ein Demultiplexer (18, 19), der angepaßt, ist, um du empfangene zusammengesetzte Signal in ein Audiosignal und ein Datensignal zu trennen;
(f) Eine Datenhandhabungseinrichtung (15), die so verbunden ist, um du Datensignal von dem Demultiplexer zu empfangen, wobei die Datenhandhabungseinrichtung angepaßt ist, um den normalen Betrieb der Einheit bei der Abwesenheit von korrekt identifizierten Kodes zu sperren.

3. Einheit gemäß Anspruch 2, worin die Datenerzeugungseinrichtung (15) angepaßt ist, um eine Folge von Datenrahmen zu erzeugen, von denen jeder Rahmen einen Sicherheitskode enthält.

4. Einheit gemäß Anspruch 3, worin die Datenerzeugungseinrichtung (15) angepaßt ist, um zumindest ausgewählte Rahmen zu erzeugen, die, genauso wie der Sicherheitskode, Anweisungen für ihre Partner einheit enthalten.

5. Einheit gemäß einem der Ansprüche 2, 3 oder 4, worin die Datenerzeugungseinrichtung (15) angepaßt ist, um ein Datensignal zu erzeugen, das eine maximale Frequenz unter 150 Hz hat, wobei das Audiosignal eine minimale Frequenz unter 150 Hz hat, und das zusammengesetzte Signal ein Frequenzteilungsmultiplex ist.

6. Einheit gemäß einem der Ansprüche 2 bis 5, worin die Datenhandhabungseinrichtung (15) angepaßt ist, um den normalen Betrieb zwischen einer und dreißig Sekunden zu sperren, nachdem der letzte korrekte Sicherheitskode erfaßt worden ist.

7. Einheit gemäß einem der Ansprüche 2 bis 6, worin die Datenhandhabungseinrichtung (15) angepaßt ist, um den korrekten Empfang von zumindest einem Sicherheitskode vor dem Initialisieren des normalen Betriebes zu bestätigen.

8. Einheit gemäß einem der Ansprüche 2 bis 7, worin die Datenhandhabungseinrichtung (15) angepaßt ist, um Anweisungen zu erkennen, die in dem empfangenen Datensignal enthalten sind, und um ihre eigene Einheit zu veranlassen den Anweisungen zu entsprechen.

9. Einheit gemäß einem der Ansprüche 2 bis 8, worin der Radioübertrager (14) abgestimmt ist auf eine Frequenz, und worin der Radioempfänger (17) auf eine unterschiedliche Frequenz abgestimmt ist.

10. Einheit gemäß einem der Ansprüche 2 bis 9, worin die Datenhandhabungseinrichtung und die Datenerzeugungseinrichtung kombiniert sind in einer einzelnen Datenverarbeitungseinrichtung (15).

## Revendications

1. Un téléphone sans fil qui comprend une unité portable (10 à 23; fig. 2) et une unité de base (10 à 19, 30 à 35; fig. 3) aptes à une communication radio en duplex entre elles, lesdites unités étant aptes à échanger des signaux audio pendant tout un appel et à échanger des séquences de codes de sécurité, et chacune des deux unités étant apte à empêcher son fonctionnement normal en l'absence de codes de sécurité identifiés de façon correcte, caractérisé en ce que les unités sont aptes à une transmission répétée des codes de sécurité dans les deux sens pendant tout un appel.

2. Une unité apte à être utilisée soit comme unité portable, soit comme unite de base d'un téléphone sans fil selon la revendication 1, unité qui comprend:
(a) un moyen générateur de donnée (15) apte à engendrer un signal de donnée qui inclut une séquence de codes de sécurité;
(b) un multiplexeur (10) apte à produire un signal composite qui comprend le signal de donnée engendré par le moyen générateur de donnée (15) et un signal audio;
(c) un transmetteur radio (14) relié audit multiplexeur pour transmettre le signal composite à une unité partenaire;
(d) un récepteur radio (17) apte à recevoir de l'unité partenaire un signal composite;
(e) un démultiplexeur (18, 19) apte à séparer le signal composite reçu en un signal audio et un signal de donnée;
(f) un moyen de traitement de donnée (15) relié de manière à recevoir du démultiplexeur le signal de donnée, ledit moyen de traitement de donnée étant apte à empêcher le fonctionnement normal de l'unité en l'absence de codes de sécurité identifiés correctement.

3. Une unité selon la revendication 2, dans laquelle le moyen générateur de donnée (15) est apte à produire une séquence de blocs de donnée, chacun desdits blocs contenant un code de sécurité.

4. Une unité selon la revendication 3, dans laquelle le générateur de donnée (15) est apte à produire au moins des blocs choisis qui contiennent, ainsi que le code de sécurité, des instructions destinées à son unité partenaire.

5. Une unité selon l'une quelconque des revendications 2, 3 ou 4, dans laquelle le moyen générateur de donnée (15) est apte à produire un signal de donnée à une fréquence maximale inférieure à 150 Hz, la fréquence minimale du signal audio étant supérieure à 150 Hz et le signal composite étant multiplexé par division de fréquence.

6. Une unité selon l'une quelconque des revendications 2 à 5, dans laquelle le moyen de traitement de donnée (15) est apte à empêcher un fonctionnement normal entre 1 et 30 secondes après la détection du dernier code de sécurité correct.

7. Une unité selon l'une quelconque des revendications 2 à 6, dans laquelle le moyen de traitement de donnée (15) est apte à confirmer la réception correcte d'au moins un code de sécurité avant de lancer un fonctionnement normal.

8. Une unité selon l'une quelconque des revendications 2 à 7, dans laquelle le moyen de traitement de donnée (15) est apte à reconnaître des instructions contenues dans le signal de donnée reçu et à amener sa propre unité à se conformer auxdites instructions.

9. Une unité selon l'une quelconque des revendications 2 à 8 dans laquelle le transmetteur radio (14) est accordé à une fréquence et un récepteur de radio (17) est accordé à une fréquence différente.

10. Une unité selon l'une quelconque des revendications 2 à 9 dans laquelle le moyen de traitement de donnée et le moyen générateur de donnée sont combinés en un moyen unique de traitement de donnée (15).
